# EUROPÄISCHE PATENTSCHRIFT

(11) **EP 0 876 642 B1**
(45) Veröffentlichungstag und Bekanntmachung des Hinweises auf die Patenterteilung: **04.10.2001**
(21) Anmeldenummer: 97909206.1
(22) Anmeldetag: 22.10.1997
(51) Int. Cl.: G05D 15/01, G05D 13/62, H02P 7/05, H02P 6/06

(54) **ANTRIEBSSYTEM UND VERFAHREN ZUR ANSTEUERUNG EINES MEHRPHASIGEN DIREKTANTRIEBS**
DRIVE SYSTEM AND METHOD OF MODULATING A MULTIPHASE DIRECT DRIVE
SYSTEME D'ENTRAINEMENT ET PROCEDE POUR UNE COMMANDE D'UN ENTRAINEMENT DIRECT POLYPHASE

(30) Priorität: 22.10.1996 DE 19643519
(43) Veröffentlichungstag der Anmeldung: 11.11.1998
(73) Patentinhaber: Dreifke, Günter, 98529 Suhl (DE); Dreifke, Lars, 98527 Suhl (DE); Dreifke, Nils, 98529 Suhl (DE); Dreifke, Sixten, 60435 Frankfurt am Main (DE); Dreifke, Sören, 98529 Suhl (DE)
(72) Erfinder: DREIFKE, Günter, D-98529 Suhl (DE); DREIFKE, Lars, D-98527 Suhl (DE); DREIFKE, Nils, D-98529 Suhl (DE); DREIFKE, Sören, D-98529 Suhl (DE); DREIFKE, Sixten, D-60435 Frankfurt am Main (DE); WENDORFF, Eckhard, D-98528 Suhl (DE); SÜSSKIND, Roland, D-98617 Neubrunn (DE)
(74) Vertreter: Engel, Christoph Klaus
(86) Internationale Anmeldenummer: DE9702436
(87) Internationale Veröffentlichungsnummer: WO9818068

(56) Entgegenhaltungen:
- DE-A- 2 937 866
- DE-A- 3 813 130
- US-A- 3 836 835
- US-A- 4 618 808

## Beschreibung

Die vorliegende Erfindung betrifft eine Antriebssystem mit einem mehrphasigen Direktantrieb und einer Regeleinheit gemäß dem Oberbegriff des Anspruchs 1.

Weiterhin betrifft die vorliegende Erfindung ein Verfahren zur Ansteuerung eines mehrphasigen Direktantriebs nach dem Prinzip des permanenterregten Reluktanzschrittmotors.

Derartige Direktantriebe werden zumeist als Schrittmotoren betrieben, wobei die Position zwischen Aktiveinheit und Passiveinheit durch das Verhältnis der Phasenströme bestimmt wird und eine kontinuierliche Bewegung durch sinus- und cosinusförmige Phasenströme erzeugt wird. Wird das Stromverhältnis geändert, so erfolgt eine Bewegung des Motors. Durch die Kommutierung erhält der Schrittmotor den Charakter eines Gleichstrommotors.

In letzter Zeit kommen insbesondere in der Feinmechanik und Gerätetechnik immer häufiger Direktantriebe, insbesondere Linearmotoren zum Einsatz, deren wesentlicher Vorteil in der Integration mehrerer für Antriebseinheiten erforderlicher Funktionen in wenigen Baueinheiten besteht. Derartige Linearantriebe besitzen, so wie andere Motoren, die nach dem elektromagnetischen Prinzip arbeiten, eine Aktiveinheit und eine Passiveinheit. Die Krafterzeugung wird durch das Zusammenwirken dieser beiden Einheiten erreicht, wobei sowohl die Aktiveinheit als auch die Passiveinheit das sich gegenüber der jeweils anderen Einheit bewegende Motorteil sein kann. Bei geeigneter konstruktiver Gestaltung, wie sie häufig bei Linearantrieben anzutreffen ist, übernehmen die Krafterzeugungselemente gleichzeitig die Funktion der Führung der sich bewegenden Teile und stellen zudem das Gestellsystem für beliebige Anwendungen dar.

Ein derartiger Linearantrieb ist in der deutschen Offenlegungsschrift DE 32 08 380 A1 beschrieben. Hier handelt es sich um einen bürstenlosen Gleichstromlinearmotor, bei welchem in der Aktiveinheit Permanentmagneten und Elektromagneten zur Erzeugung eines steuerbaren Magnetflusses kombiniert sind, während die Passiveinheit aus einem mit Polzähnen versehenen Weicheisenstreifen besteht.

In der amerikanischen Patentschrift US 4 563 602 ist ein Linearmotor beschrieben, der unter anderem eine sehr einfach aufgebaute Passiveinheit angibt und sowohl als Einphasensynchronmaschine als auch als Mehrphasensynchronmaschine ausgestaltet sein kann. Ebenso ist aus diesem Dokument die Möglichkeit einer Luftlagerung zwischen Aktiv- und Passiveinheit vorbekannt.

Aus dem Stand der Technik ist auch bekannt, daß Linearmotoren nicht nur zur Erzeugung geradliniger Bewegungen in einer Richtung eingesetzt werden können. Beispielhaft wird hier die europäische Patentanmeldung EP 0 237 639 A1 angeführt, die eine Verwendung des Direktantriebs in einem zylinderförmig aufgebauten Motor angibt. Damit lassen sich beispielsweise Bewegungen in Richtung der z-Achse realisieren.

In der Zeitschrift "Antriebstechnik" 33 (1994) Nr. 7, S. 68 ist bereits ein Präzisionsdirektantrieb des Anmelders beschrieben. Dort ist das Funktionsprinzip eines permanentmagneterregten Zweiphasen-Reluktanzschrittmotors in Hybridtechnik gezeigt. Der Inhalt dieses Dokuments wird bezüglich der Funktionsweise von Direktantrieben in die Offenbarung einbezogen, um Wiederholungen zu vermeiden.

In einer vorangegangenen Patentanmeldung des Anmelders, die veröffentlicht ist als DE 44 36 865 A1, wird ein modularer Planarläufer angegeben, der aus mehreren Modulbausteinen aufgebaut ist. Der Inhalt dieser Schrift wird ebenfalls in die Offenbarung einbezogen, soweit der Aufbau und die Funktionsweise der hier nicht näher beschriebenen Antriebseinheiten betroffen ist.

In der deutschen Patentanmeldung 195 13 325.0 des Anmelders ist eine Wegmeßeinrichtung beschrieben, bei der an einem Direktantrieb Hall-Sensoren zum Einsatz kommen. Die Struktur des Stators soll dabei als Wegmeßsystem genutzt werden.

In einer Patentanmeldung des Anmelders vom 22.10.1996 mit dem Titel "Linearantrieb und Verfahren zur Herstellung einer Passiveinheit eines Linearantriebs, sowie Vorrichtung zur Durchführung des Verfahrens" (DE 196 43 518.8) ist ein Direktantrieb mit einem besonders ausgestalteten Leichtbaustator beschrieben, wobei auf das Prinzip des Direktantriebs eingegangen wird. Soweit der Antrieb als solches betroffen ist, wird dieses Dokument in die Offenbarung einbezogen, um detaillierte Ausführungen über den Aufbau eines Direktantriebs an dieser Stelle nicht wiederholen zu müssen.

Die meisten bekannten Direktantriebe bzw. Linearmotoren wurden bislang als Schrittmotoren betrieben. Die erzielbaren Positioniergenauigkeiten sind somit von der begrenzten mechanischen Fertigungsgenauigkeit bei diesen Motoren bestimmt. Allgemein besteht bei Schrittmotoren der Nachteil, daß keine Rückinformationen über die Stellung zwischen Aktiv- und Passiveinheit vorliegen, wodurch hochgenaue Einstellungen nicht möglich sind. Aufgrund der mangelnden Rückinformation besteht weiterhin die Gefahr, daß es zu ungünstigem Schwingungsverhalten des Schrittmotors kommen kann.

Außerdem tritt bei den als Schrittmotor betriebenen Direktantrieben der Nachteil auf, daß die einer von außen entgegen der Bewegungsrichtung auf den Antrieb einwirkenden Kraft jeweils entgegengesetzte Haltekraft abhängig ist von der Größe der Auslenkung aus der Nullage des Motors, bezogen auf jeden einzelnen Schritt. Die vom Motor erzeugte Antriebskraft schwankt daher zwischen einem Maximalbetrag und Null, je nach der Stellung zwischen Aktiv- und Passiveinheit. Dies resultiert aus der Kraft-Weg-Kennlinie, die bei sinusförmigen Speiseströmen ebenfalls sinusförmig verläuft, also Bereiche maximaler Krafterzeugung und Bereiche mit der Kraft gleich Null besitzt. Nach jedem vollständig ausgeführten Schritt des Motors ist daher die Haltekraft bzw. die Antriebskraft gleich Null, solange keine weitere Bewegung zwischen Aktiv- und Passiveinheit erfolgt.

In einer anderen Patentanmeldung des Anmelders vom 22.10.96 mit dem Titel "Linearantrieb in Modulbauweise und Verfahren zur Herstellung einer Aktiveinheit eines solchen. Linearantriebs" (DE 196 43 521.8) wird unter anderem dargelegt, daß Motormodule mit integriertem Wegmeßsystem und übliche Motormodule leicht zu größeren Aktiveinheiten verbunden werden können.

Aus der amerikanische Patentschrift US-A-4 618 808 ist ein elektromagnetisches Betätigungssystem mit einem Schrittmotor bekannt. Die dort verwendeten Reluktanzschrittmotoren werden mit mindestens 3 Spulensystemen betrieben und besitzen keine Permanentmagnete zur Aufrechterhaltung eines ständigen Magnetflusses. Aufgrund der begrenzten Herstellungsgenauigkeit für solche Systeme und der besonders hohen Anforderung an die Ebenheit der gegenüberliegenden Aktiveinheitselemente muß bei diesem System ein größerer Luftspalt vorgesehen sein, der auch eine gröbere Zahnteilung der strukturierten Flächen zur Folge hat. Die Positioniergenauigkeit dieser Motoren ist daher begrenzt und die Ausdehnung der Laufflächen ist auf relativ kleine Flächen eingeschränkt.

Die Aufgabe der vorliegenden Erfindung besteht somit darin, ein Antriebssystem zur Verfügung zu stellen, welches die genannten Nachteile vermeidet und bei dem der ein Direktantrieb im Regelkreis betrieben werden kann. Dabei soll eine Regeleinheit ermöglicht werden, bei der die vom Direktantrieb erzeugte Kraft in keiner zwischen Aktiv- und Passiveinheit angenommenen Stellung Null ist, vorzugsweise immer den Maximalwert annimmt.

Diese Aufgabe wird durch die im kennzeichnenden Teil des Anspruchs 1 angegebenen Merkmale gelöst.

Durch die Verwendung eines derartigen Antriebssystems werden Rückinformationen über die aktuelle Stellung zwischen Aktiv- und Passiveinheit ermittelt, die nach einer Verarbeitung innerhalb geeigneter Logikschaltungen zur Beeinflussung des Speisestroms herangezogen werden. Damit ist es möglich, daß die dem Direktantrieb zugeführten Speiseströme zu jedem Zeitpunkt so ausgewählt werden können, daß aufgrund des gewählten Vorlaufwinkels vom Antrieb jeweils die maximale Haltekraft, die der Antriebskraft entspricht, erzeugt wird. Die Phasenlage zwischen den einzelnen Phasen des Speisestroms bleibt dabei unverändert.

Bei einer besonders zu bevorzugenden Ausführungsform wird ein zweiphasiger Steuerstrom von der Regeleinheit zur Verfügung gestellt. Dies bietet den Vorteil, daß Direktantriebe mit einfachem Aufbau und guten Leistungswerten durch die Regeleinheit angesteuert werden können.

Zur Erzielung der maximalen Antriebskraft an zweiphasigen Direktantrieben ist es besonders vorteilhaft, wenn der Vorlaufwinkel mindestens 90° bzw. kleiner als -90° bei entgegengesetztem Richtungssinn ist.

In einer besonders zu bevorzugenden Ausführungsform wird die Regeleinheit mit einem permanenterregten Zweiphasen-Reluktanzmotor eingesetzt, bei welchem die magnetisierbaren Bereiche an der Passiveinheit in feiner Strukturierung Polzähne mit einer auf die Aktiveinheit abgestimmten Teilungsperiode besitzen.

Eine weiter zu bevorzugende Ausführungsform zeichnet sich zudem dadurch aus, daß der das Positionssignal erzeugende Geber innerhalb einer Teilungsperiode eine Vielzahl von Lagewerten liefert, die sich in der darauffolgenden Teilungsperiode zyklisch wiederholen. Dadurch ist bereits bei kleinsten Bewegungen, die sich nur über Bruchteile einer Teilungsperiode erstrecken, eine genaue Regelung des Antriebs möglich, woraus geringste Reaktionszeiten und hohe Positioniergenauigkeiten resultieren.

Bei einer besonders zu bevorzugenden Ausführungsform sind im Zentrum der Aktiveinheit vier Hall-Sensoren so angeordnet, daß sie in Bezug auf die Teilungsperiode jeweils ein um 90° phasenversetztes Sensorsignal abgeben. Die Auswertung der vier Sensorsignale erfolgt in bekannter Weise, wobei aus dem ersten Sensorsignal mit 0° Grad Phasenlage und dem zweiten Sensorsignal mit 180° Phasenlage ein erstes Differenzsignal gebildet wird, aus dem dritten Sensorsignal mit 90° Phasenlage und dem vierten Sensorsignal mit 270° Phasenlage ein zweites Differenzsignal gebildet wird und die beiden Differenzsignale anschließend digitalisiert werden. Aus den gewonnenen digitalen Signalen kann in bekannter Weise sowohl die absolute Stellung der Aktiveinheit gegenüber der Passiveinheit innerhalb einer Teilungsperiode bestimmt werden, als auch der aktuelle Richtungssinn der Bewegung ermittelt werden. Die Vorgehensweise bei der Auswertung derartiger Signale und die dafür erforderlichen Schaltungen sind dem Fachmann hinlänglich bekannt, so daß diese hier nicht näher beschrieben werden.

Es ist zweckmäßig, in der Regeleinheit weiterhin eine interne Geschwindigkeitsmeßeinheit vorzusehen, die unter Verknüpfung der ermittleten digitalisierten Signale mit der Zeit die aktuelle Geschwindigkeit der Bewegung bestimmt. Bereits aus zwei Positionswerten, die innerhalb einer Teilungsperiode liegen können, aber auch in aufeinanderfolgenden Teilungsperioden ermittelbar sind, kann die Geschwindigkeit hinreichend genau bestimmt werden. Der so gewonnene Geschwindigkeitswert wird anschließend in der Auswerteeinheit mit dem Positionssignal verknüpft. Das resultierende Regelsignal ist entsprechend verändert, wobei der Betrag des Vorlaufwinkels mit wachsender Geschwindigkeit vergrößert wird. Daraus resultiert ein Vorlaufwinkel der Steuerströme, der größer als 90° bzw. kleiner als -90° ist. Aufgrund veränderter magnetischer Eigenschaften und von Trägheiten ist der für die maximale Krafterzeugung erforderliche Vorlaufwinkel nur bei Geschwindigkeiten nahe Null mit einem Betrag von 90° optimal gewählt. Bei höheren Geschwindigkeiten wird vom Direktantrieb die maximale Antriebskraft nur dann zur Verfügung gestellt, wenn der Betrag des Vorlaufwinkels größer als 90° bzw. in entgegengesetzter Richtung kleiner als -90° ist.

Es ist erfindungsgemäß vorgesehen, daß die Regeleinheit weiterhin ein externes Meßsystem umfaßt, welches ein die Stellung zwischen Aktiv- und Passiveinheit repräsentierendes externes Meßsignal abgibt. Das externe Meßsystem kann z.B. bei Linearantrieben ein beliebiges Längenmeßsystem sein. Es ist lediglich erforderlich, daß das externe Meßsignal über den gesamten Bewegungsbereich, der erfaßt werden soll, direkt von der jeweiligen Stellung zwischen Aktiv- und Passiveinheit abhängig ist. Es können beispielsweise Lasermeßsysteme oder auf einem Glasmaßstab basierende Längenmeßsysteme verwendet werden. Durch Auswertung des externen Meßsignals kann unter Berücksichtigung der Zeit die Geschwindigkeit der Bewegung separat bestimmt werden. Daraus resultiert ein externer Geschwindigkeitswert, welcher vorzugsweise mit einem Geschwindigkeitssollsignal verglichen wird, wobei im Ergebnis dieses Vergleichs ein Korrektursignal gebildet wird. Über das Geschwindigkeitssollsignal ist die erwünschte Geschwindigkeit des Systems vorgebbar. Das ermittelte Korrektursignal spiegelt die Abweichungen vom Sollwert wieder, was durch hinlänglich bekannte Schaltungseinheiten und logische Verknüpfungen realisierbar ist. Indem das Korrektursignal der Auswerteeinheit zugeführt und bei der Bildung des Regelsignals herangezogen wird, lassen sich im Ergebnis die Speiseströme so beeinflussen, daß vom Direktantrieb die gewünschte Geschwindigkeit zur Verfügung gestellt wird.

Zum Aufbau der externen Regelschaltung eignen sich Standardregler, insbesondere ist für einen entsprechenden Direktantrieb ein PID-Regler geeignet. Je nach Anwendungsfall und gewünschter Genauigkeit können aber auch andere Regler verwendet werden.

In gleicher Weise kann mit einer weiteren Führungsgröße die maximal vom Antrieb zu erzeugende Kraft vorgegeben und geregelt werden.

Die Regeleinheit kann weiterhin eine Positionsbestimmungseinheit umfassen, der das aus dem externen Meßsystem gewonnene externe Meßsignal zugeführt wird. In die Positionsbestimmungseinheit wird ebenfalls eine Führungsgröße eingespeist, die einer gewünschten Position entspricht, an der die Relativbewegung zwischen Aktiv- und Passiveinheit gestoppt werden soll. Die Positionsbestimmungseinheit verarbeitet die beiden Eingangsgrößen und erzeugt ein Stoppsignal, welches an die Auswerteeinheit abgegeben wird, wodurch das Stoppen an der gewünschten Position erreicht werden kann. Das Stoppsignal wird vorzugsweise mit dem externen Geschwindigkeitssignal gekoppelt. Beispielsweise kann das Geschwindigkeitssollsignal eine zwischen einem positiven und einem negativen Maximalwert veränderliche Spannung sein, wobei je nach Polarität der Richtungssinn der Bewegung bestimmt ist und bei einer Spannung gleich Null die Geschwindigkeit ebenfalls Null wird.

Durch diese Verwendung des externen Meßsystems sind Positioniergenauigkeiten erzielbar, die im wesentlichen nur durch die Genauigkeit der externen Maßverkörperung bestimmt sind. Die erzielbaren Genauigkeiten sind damit deutlich höher, als die lediglich unter Verwendung des integrierten Wegmeßsystems erreichbaren Positioniergenauigkeiten.

Weitere Vorteile, Weiterbildungen und Einzelheiten ergeben sich aus der nachfolgenden Beschreibung bevorzugter Ausführungsbeispiele unter Bezugnahme auf die Zeichnungen. Es zeigen:
- Fig. 1: ein Blockschaltbild einer Regeleinheit für einen zweiphasigen Direktantrieb;
- Fig. 2: eine vereinfachte, teilweise geschnittene Ansicht von vorn des Direktantriebs mit Aktiv- und Passiveinheit, wie er aus dem Stand der Technik bekannt ist;
- Fig. 3: eine seitliche Schnittansicht der Aktiveinheit des Direktantriebs mit vier integrierten Hall-Sensoren;
- Fig. 4: eine Ansicht von unten auf die in Fig. 3 gezeigte Aktiveinheit;
- Fig. 5: eine vereinfachte Schnittansicht von vorn, gesehen entlang der Schnittlinie A-A in Fig. 4;
- Fig. 6: ein Blockschaltbild einer Auswerteeinheit, die Teil der in Fig. 1 gezeigten Regeleinheit ist;
- Fig. 7: in Diagrammform die Verläufe der Standardspeiseströme bei einem als Schrittmotor betriebenen Direktantrieb, die über die Wegachse aufgetragen sind, und die zugehörigen Spannungsverläufe von Sensorsignalen, die sich bei Verwendung der in Fig. 3 gezeigten Bauvariante der Aktiveinheit ergeben;
- Fig. 8: ein Diagramm, in dem ein von der Auswerteeinheit ermittelter Lagewert über der Stellung zwischen Aktiv- und Passiveinheit aufgetragen ist;
- Fig. 9: ein Diagramm,in dem ein interner Geschwindigkeitswert über der aktuellen Geschwindigkeit der Bewegung aufgetragen ist;
- Fig. 10: in Diagrammform die Signalverläufe von Regelsignalen, die von der Auswerteeinheit gebildet werden, aufgetragen über dem Weg, jeweils für positiven und negativen Richtungssinn;
- Fig. 11: ein Blockschaltbild einer weiteren Ausführungsform der Regeleinheit mit einem externen Meßsystem.
- Fig. 12: ein Blockschaltbild einer weiteren Ausführungsform der Regeleinheit ohne externes Meßsystem;
- Fig. 13: den Prinzipaufbau eines Hallsensormeßsystems mit 2 Strukturkörpern;
- Fig. 14: eine andere Anordnungsvariante für ein integriertes Hallsensorwegmeßsystem;
- Fig. 15: eine andere Variante eines Hallsensorwegmeßsystems mit 4 Hallsensoren.

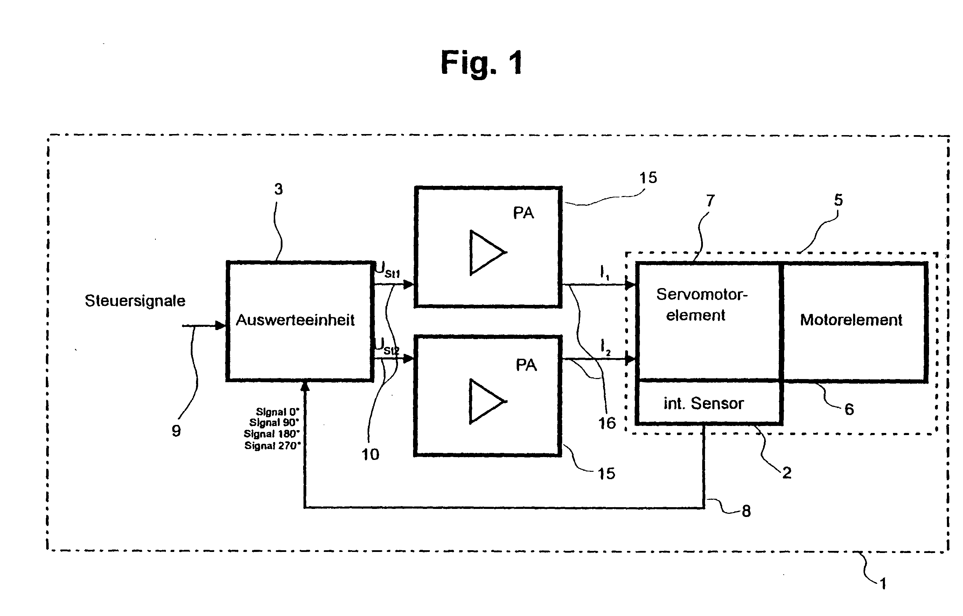

In Fig. 1 ist ein prinzipielles Blockschaltbild einer Regeleinheit für einen zweiphasigen Direktantrieb gezeigt. Die Regeleinheit 1 umfaßt einen Geber 2 und eine Auswerteeinheit 3. Der Geber 2 ist als integrierter Sensor in einer Aktiveinheit 5 des Direktantriebs ausgebildet. Die Aktiveinheit 5 kann aus mehreren Motorelementen 6 bestehen, von denen zumindest eins als Servomotorelement 7 arbeitet, wobei die weiteren Motorelemente 6 in identischer Weise angesteuert werden.
Das Servomotorelement 7 ist unmittelbar mit dem integrierten Sensor 2 verbunden. Der integrierte Sensor liefert zumindest ein Positionssignal 8, welches die relative Stellung zwischen Aktiv- und Passiveinheit des Direktantriebs widerspiegelt. Im vorliegenden Fall besteht das Positionssignal 8 aus vier einzelnen Sensorsignalen, die eine Phasenverschiebung von jeweils 90° aufweisen.
Das Positionssignal 8 wird der Auswerteeinheit 3 zugeführt. Als weitere Eingangsgröße erhält die Auswerteeinheit ein oder mehrere Steuersignale 9, die beispielsweise als Stellgrößen wirken. Die Funktion der Auswerteeinheit 3 wird weiter unten beschrieben. Nach Verarbeitung der Steuersignale 9 und des Positionssignals 8 gibt die Auswerteeinheit ein Regelsignal 10 ab, welches sich im gezeigten Beispiel in die beiden Steuerspannungen Uₛₜ₁ und Uₛₜ₂ aufteilt. Das Regelsignal 10 wird einem Leistungsstellglied 15 zugeführt, das die Speiseströme 16 bereitstellt, mit dem die Aktiveinheit 5 angetrieben wird.

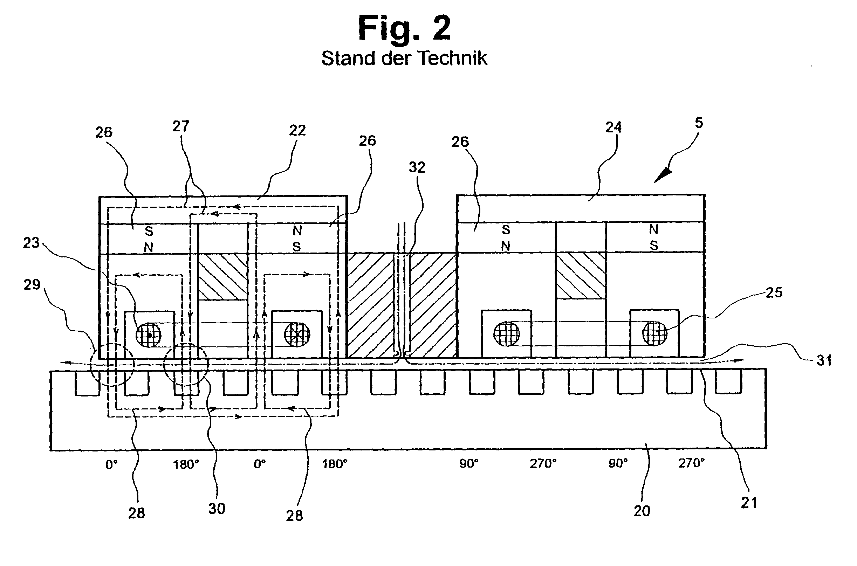

Fig. 2 zeigt eine teilweise geschnittene Ansicht eines Direktantriebes, der als permanenterregter Zweiphasen-Reluktanzmotor ausgelegt ist. Der Direktantrieb besitzt die Aktiveinheit 5 und eine Passiveinheit 20. Bei der Passiveinheit 20 handelt es sich beispielsweise um einen auf einem Träger aufgebrachten Weicheisenstreifen, der durch eine Vielzahl von Polzähne 21 quer zur Bewegungsrichtung strukturiert ist. Die Polzähne 21 sind im einzelnen in Fig. 2 nur vom Prinzip her erkennbar. Sie sind sehr dicht aneinander angereiht. Eine Teilungsperiode p, die jeweils einen Polzahn und eine Zahnlücke umfaßt, von 0,64 mm oder 1,28 mm hat sich als besonders geeignet erwiesen.

Die Aktiveinheit 5 umfaßt zumindest eine erste Rückschlußplatte 22 und zwei Blechpakete, um die eine erste elektrische Wicklung 23 aufgebracht ist, und eine zweite Rückschlußplatte 24 und zwei weitere Blechpakete mit einer zweiten elektrischen Wicklung 25. Im einfachsten Fall wird die erste elektrische Wicklung 23 von der ersten Phase des Steuerstroms durchflossen, währenddessen die zweite Phase des Steuerstroms an die zweite elektrische Wicklung angelegt ist. Die Rückschlußplatten 22, 24 sind weiterhin mit je einem Permanentmagneten 26 in magnetischem Kontakt, wodurch ein ständiger Magnetfluß 27 erzeugt wird, der sowohl die Blechpakete als auch die strukturierten Bereiche der Passiveinheit 20 durchsetzt.

Die Phasen des Speisestroms, welche die elektrischen Wicklungen 23, 25 durchfließen, erzeugen einen temporären Magnetfluß 28. Der resultierende Gesamtmagnetfluß wird daher in Verstärkungsbereichen 29 vergrößert und in Schwächungsbereichen 30 entsprechend verkleinert. Zwischen der Aktiveinheit 5 und der Passiveinheit 20 wirken demzufolge magnetische Kräfte, die als Antriebskräfte genutzt werden, woraus eine Relativbewegung zwischen Aktiv- und Passiveinheit resultiert. Die Funktionsweise eines derartigen Direktantriebes ist in soweit bekannt.
Die Lagerung zwischen Aktiveinheit 5 und Passiveinheit 20 kann beispielsweise durch ein Luftlager 31 ausgebildet sein, welches mit Druckluft aufgebaut wird, die über eine Düse 32 in der Aktiveinheit zugeführt wird. Die Zahnlücken sind deshalb beispielsweise mit einem Polymer verfüllt.

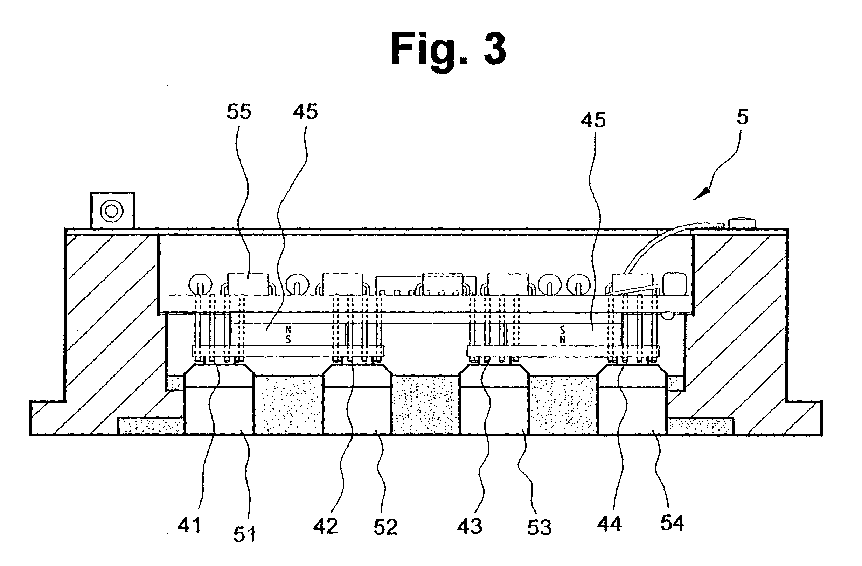

Fig. 3 zeigt eine seitliche Schnittansicht der Aktiveinheit 5, in deren Zentrum Sensoren zur Erfassung der Stellung zwischen Aktiv- und Passiveinheit angeordnet sind. Bei der gezeigten Ausführungsform sind ein erster Hall-Sensor 41, ein zweiter Hall-Sensor 42, ein dritter Hall-Sensor 43 und ein vierter Hall-Sensor 44 vorgesehen. Es ist zweckmäßig, wenn zusätzliche Permanentmagnete 45 in der Nähe dieser Sensoren angeordnet sind, die in Strukturkörpern 51-54, die den jeweiligen Sensoren 41-44 zugeordnet sind, einen definierten permanenten Magnetfluß erzeugen. Die Hall-Sensoren 41-44 registrieren in bekannter Weise signifikante Veränderungen des Magnetflusses, die im vorliegenden Fall durch die Relativbewegung zwischen Aktiv- und Passiveinheit hervorgerufen werden, wobei die Polzahnstrukturen der Passiveinheit gut erfaßbare Magnetflußänderungen bewirken. In der Aktiveinheit 5 können darüber hinaus elektronische Bauelemente 55 angeordnet sein, mit denen die von den Hall-Sensoren gelieferten Signale erfaßt und weiter verarbeitet werden.

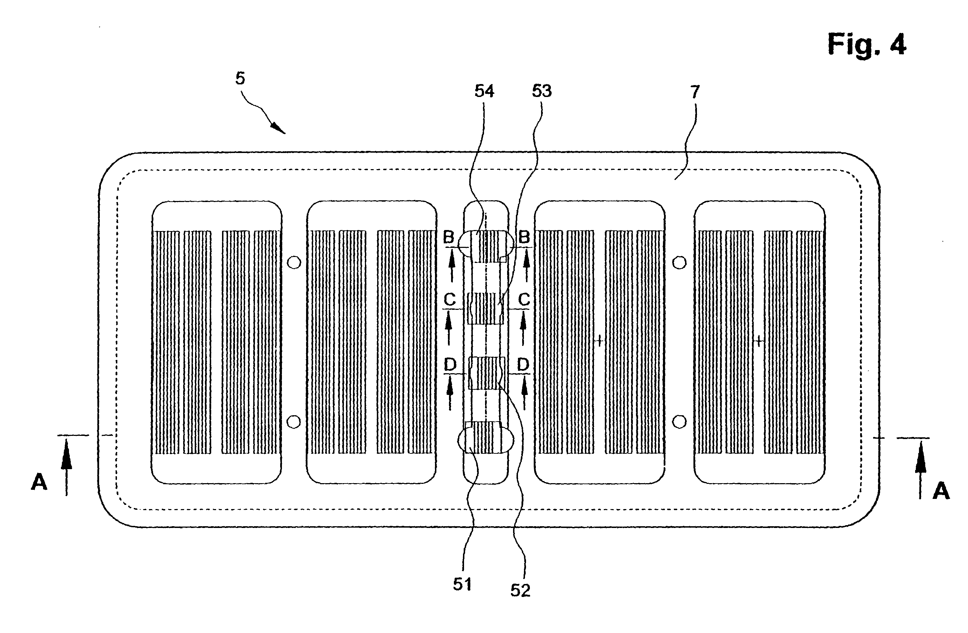

Fig.4 zeigt eine Ansicht von unten auf die Aktiveinheit 5 mit den Hall-Sensoren, die hinter den sichtbaren Strukturkörpern 51-54 verborgen sind. Die Anordnung der Sensoren in der Mitte des Servomotorelements 7 ist besonders zweckmäßig, da an dieser Stelle die geringsten Fehlerabweichungen von der gewünschten Führungsbahn auftreten. Die Strukturierung der Strukturkörper 51-54 entspricht im wesentlichen der Strukturierung der einzelnen Polzähne, die an den Blechpaketen der Aktiveinheit ausgebildet sind. Jedoch weisen die Strukturkörper jeweils einen Versatz von 90° Grad, bezogen auf die Teilungsperiode p von Polzähnen und Zahnlücken auf.

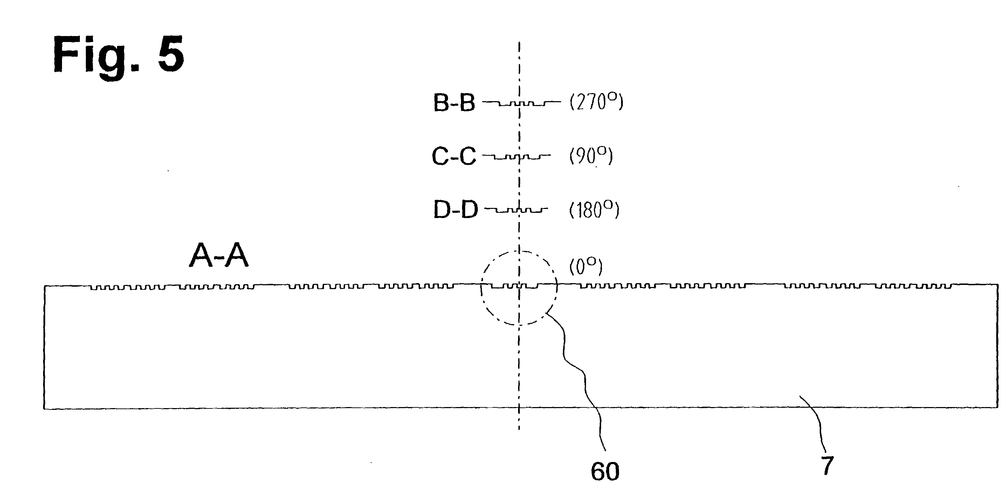

In Fig. 5 ist eine vereinfachte Schnittansicht von vorn entlang der Schnittlinie A-A dargestellt. Diese Ansicht dient der Verdeutlichung der konkreten Anordnung der Strukturkörper 51-54 mit der jeweils erwünschten Phasenlage. Im Bereich 60 ist die Struktur des ersten Strukturkörpers 51 erkennbar, der mit einer Phasenlage von 0° Grad gegenüber der Teilungsperiode p angeordnet ist. Zur besseren Veranschaulichung sind darüber die Schnittbilder entlang der in Fig. 4 bestimmten Schnittlinien B-B, C-C, D-D eingezeichnet, wodurch die Anordnung der weiteren Strukturkörper 52, 53, 54 erkennbar ist. Die Schnittansicht D-D entspricht der Struktur des zweiten Strukturkörpers 52, der eine Phasenlage von 180° Grad gegenüber der Teilungsperiode p aufweist. Die Schnittansicht C-C ist dem dritten Strukturkörper 53 zugeordnet, der mit einer Phasenlage von 90° Grad eingesetzt ist. Schließlich verdeutlicht die Schnittansicht B-3 die Anordnung des vierten Strukturkörpers 54, der eine Phasenlage von 270° gegenüber der Teilungsperiode p aufweist.

Kommt es zu einer Relativbewegung zwischen der Aktiv- und Passiveinheit, so ändern sich die Magnetflüsse durch die Strukturkörper 51 - 54. Die Hallsensoren 41 - 44 messen die Magnetflüsse und geben das Positionssignal 8.

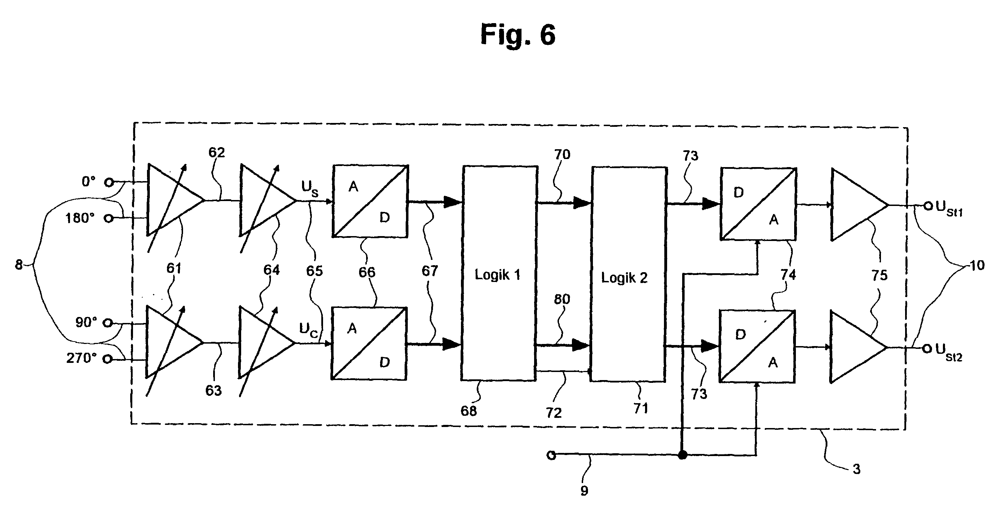

Fig. 6 zeigt ein Blockschaltbild, in dem einzelne Baugruppen der Auswerteeinheit 3 dargestellt sind. Das Positionssignal 8 wird mit den jeweils um 90° phasenversetzten vier Komponenten in die Ansteuereinheit eingespeist. Jeweils zwei zueinander um 180° phasenversetzte Sensorsignale sind auf Differenzverstärker 61 geführt, die ein erstes Differenzsignal 62 und ein zweites Differenzsignal 63 bilden, welche an zwei Verstärker 64 weitergeführt werden. Die Verstärker 64 dienen der Signalanpassung und speisen jeweils eine Steuerspannung 65 in zwei Analog/Digital-Wandler 66 ein. Mit Hilfe dieser an sich bekannten Signalaufbereitung stehen digitale Signale zur Verfügung, in denen die Stellung der Aktiveinheit gegenüber der Passiveinheit innerhalb einer Teilungsperiode p in absolut kodierter Form enthalten ist. Außerdem ist in den Signalen eine Richtungsinformation enthalten, aus welcher der aktuelle Richtungssinn bestimmt werden kann.

Die Analog/Digital-Wandler 66 geben zwei digitale Signale 67 an eine erste Logikschaltung 68 ab. In der ersten Logikschaltung 68 wird aus den digitalen Signalen 67 ein die aktuelle Stellung zwischen Aktiv- und Passiveinheit kennzeichnender Lagewert 70 gewonnen, der an eine zweite Logikschaltung 71 abgegeben wird.
Außerdem bildet die erste Logikschaltung 68 einen den aktuellen Richtungssinn kennzeichnenden Richtungswert 72, der ebenfalls an die zweite Logikschaltung 71 abgegeben wird. In der zweiten Logikschaltung 71 werden aus den eingespeisten Werten 70, 72 die binär kodierten Sollwerte 73 für die zwei Phasen des Speisestroms gebildet. Es folgen zwei Digital/AnalogWandler 74, die diese digitalen Sollwerte 73 in analoge Signale wandeln, welche an weitere Verstärker 75 abgegeben werden. Diese weiteren Verstärker 75 führen eine Pegelanpassung durch und geben die beiden Phasen des Regelsignals 10 ab, welche an die in Fig. 1 gezeigten Leistungsstellglieder 15 weitergeführt werden, die die Speiseströme 16 bereitstellen.

Der Auswerteeinheit 3 wird weiterhin mindestens ein Steuersignal 9 zugeführt, welches beispielsweise auf die Digital-Analog-Wandler 74 einwirkt. Damit lassen sich z.B. die gewünschte maximale Antriebskraft und der Richtungssinn vorwählen. In der zweiten Logikschaltung 71 werden ausgehend von dem Lagewert 70 die binäre Sollwerte 73 so ermittelt, daß der Vorlaufwinkel der beiden Phasen des Speisestroms mindestens +90° Grad bzw. -90° Grad bei negativem Richtungssinn beträgt. Damit ist gewährleistet, daß unabhängig von der aktuellen Stellung zwischen Aktiv- und Passiveinheit der Speisestrom stets mit einem Vorlaufwinkel zugeführt wird, der am Direktantrieb die maximale Antriebskraft erzeugt.

Versuche und mathematische Berechnungen haben gezeigt, daß ein Vorlaufwinkel von +90° bzw. -90° Grad nur dann zu einer maximalen Krafterzeugung führt, wenn die Geschwindigkeit der ausgeführten Bewegung nahe Null ist. Bei höheren Geschwindigkeiten ist zur maximalen Krafterzeugung ein höherer Betrag des Vorlaufwinkels erforderlich. Dies ergibt sich aus den veränderten magnetischen Bedingungen und den entsprechenden Trägheiten. Bei einer abgewandelten Ausführungsform wird aus diesen Gründen bei der Bestimmung des Vorlaufwinkels des Speisestroms auch die aktuelle Geschwindigkeit berücksichtigt.

Dazu wird aus den digitalen Signalen 67 in der ersten Logikschaltung 68 weithin ein Geschwindigkeitswert 80 gebildet, der wiederum der zweiten Logikschaltung 71 zugeführt wird. Zur Bestimmung des Geschwindigkeitswertes können zwei von den Sensoren aufgenommene Positionswerte mit der Zeit verknüpft werden. Vorzugsweise werden, zumindest bei kleineren Geschwindigkeiten, zwei unterschiedliche Positionen innerhalb einer Teilungsperiode p ausgewertet. In der zweiten Logikschaltung 71 wird der Geschwindigkeitswert 80 durch logische Verknüpfung derart bei der Ermittlung der binär kodierten Sollwerte 73 berücksichtigt, daß der Betrag des zu bildenden Vorlaufwinkels bei höheren Geschwindigkeiten jeweils größer ist.

Die in den Fig.n 7 bis 10 gezeigten Diagramme dienen dem besseren Verständnis der Funktionsweise der Regeleinheit, so daß auf eine detailliertere Beschreibung der verwendeten Schaltungseinheiten verzichtet werden kann. In den gezeigten Ausführungsformen werden die einzelnen Signalbearbeitungen durch Hardwarelösungen realisiert. Der konkrete Aufbau ergibt sich aus den allgemein bekannten Prinzipien der Schaltungsstrukturen und unter Verwendung standardisierter Bauelemente. Es ist aber auch möglich, die Signalbearbeitung von einem oder mehreren Mikroprozessoren vornehmen zu lassen, die mit einer speziellen Software an diesen Einsatzzweck angepaßt werden.

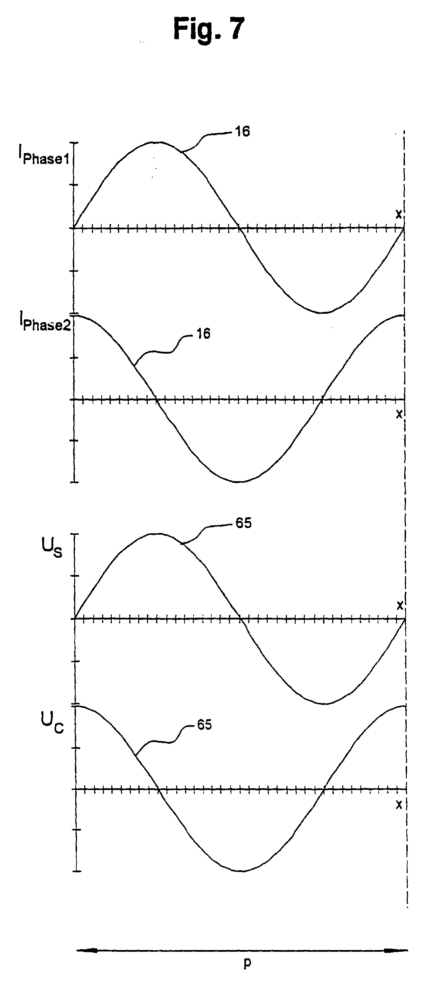

Bei den vier in Fig. 7 gezeigten Diagrammen ist der Weg x an der Abszisse aufgetragen. Die Strecke p entspricht einer mechanischen Teilungsperiode, die einen Polzahn und eine Zahnlücke auf der Passiveinheit umfaßt. An der Ordinate der oberen beiden Diagramme ist die erste Phase I_{Phase1} bzw. die zweite Phase I_{Phase2} eines Standardspeisestroms aufgetragen. Die erste Phase hat einen sinusförmigen Verlauf und die zweite Phase verläuft cosinusförmig. Der dargestellte Stromverlauf entspricht dem Betrieb des Direktantriebs als normaler Schrittmotor mit einem Vorlaufwinkel von 0°. Die beiden unteren Diagramme zeigen den Verlauf der zugeordneten Steuerspannungen 65, Uₛ und U_{c}, die nach Differenzbildung aus den um 180° Grad versetzten Sensorsignalen gebildet werden. Diese haben ebenfalls einen sinus- bzw. cosinusähnlichen Verlauf.

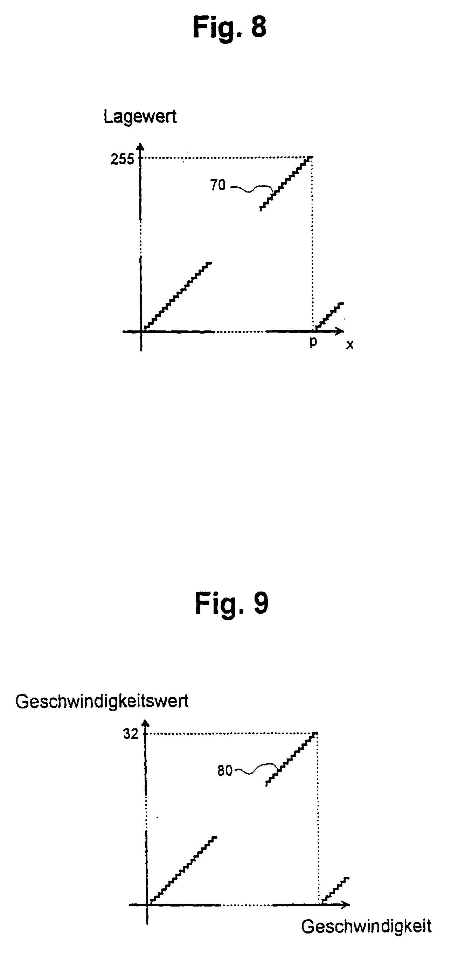

In dem in Fig. 8 gezeigten Diagramm ist der Lagewert 70 über dem Weg innerhalb einer Teilungsperiode p aufgetragen. Durch Verwendung der ersten Logikschaltung 68 ist jeder Stellung zwischen Aktiv- und Passiveinheit ein diskreter Lagewert zugeordnet. Damit ist es auch möglich, bestimmte systematische Fehler, die bei der Positionsermittlung auftreten, auszugleichen. Besonders zweckmäßig ist der Einsatz von fest programmierten oder frei programmierbaren Logikschaltungen, wie z.B. ein EPROM. Im gezeigten Beispiel sind innerhalb jeder Teilungsperiode p 256 verschiedene Lagewerte definiert. Bei gewünschter höherer Genauigkeit können mit dem vorgeschlagenen Aufbau aber auch höhere Auflösungen erreicht werden.

Soweit die aktuelle Geschwindigkeit in die Bestimmung des Vorlaufwinkels einbezogen werden soll, ergibt sich beispielsweise ein in Fig. 9 dargestellter Verlauf des Geschwindigkeitswerts 80, der über der tatsächlichen Geschwindigkeit aufgetragen ist. Es hat sich gezeigt, daß eine Gruppierung der aktuellen Geschwindigkeit in 32 diskrete Geschwindigkeitswerte ausreichend ist, um den Vorlaufwinkel mit genügender Genauigkeit einzustellen.

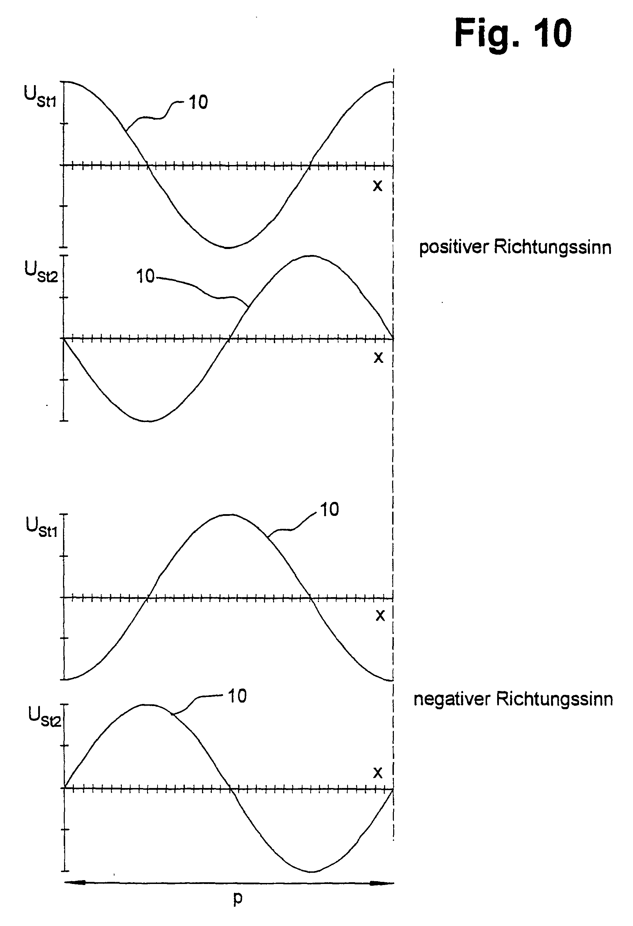

In Fig. 10 sind in vier Diagrammen die Signalverläufe der von der Auswerteeinheit gebildeten Regelsignale 10 (jeweils die beiden Phasen) über dem Weg aufgetragen. Die beiden oberen Diagramme gelten für die positive Bewegungsrichtung und die beiden unteren Diagramme zeigen die entsprechenden Signalverläufe bei negativer Bewegungsrichtung. Es handelt sich dabei um idealisierte Darstellungen der zu erzeugenden Signale, wie sie für Geschwindigkeiten nahe Null angestrebt werden. Bei diesen kleinen Geschwindigkeiten wird die maximale Antriebskraft bei einem Vorlaufwinkel des Steuerstroms von +90° bzw. -90° erzielt. Der Winkel zwischen den beiden Phasen wird dabei nicht beeinflußt.
Durch die Erfassung der Geschwindigkeit und deren Verarbeitung in einer Logikschaltung ist es auch möglich, jedem Geschwindigkeitswert ganz gezielt einen veränderten Speisestrom zuzuordnen.

Aus den dargestellten Regelsignalen 10 werden in der genannten Weise die Speiseströme erzeugt, die den gleichen Vorlaufwinkel aufweisen.

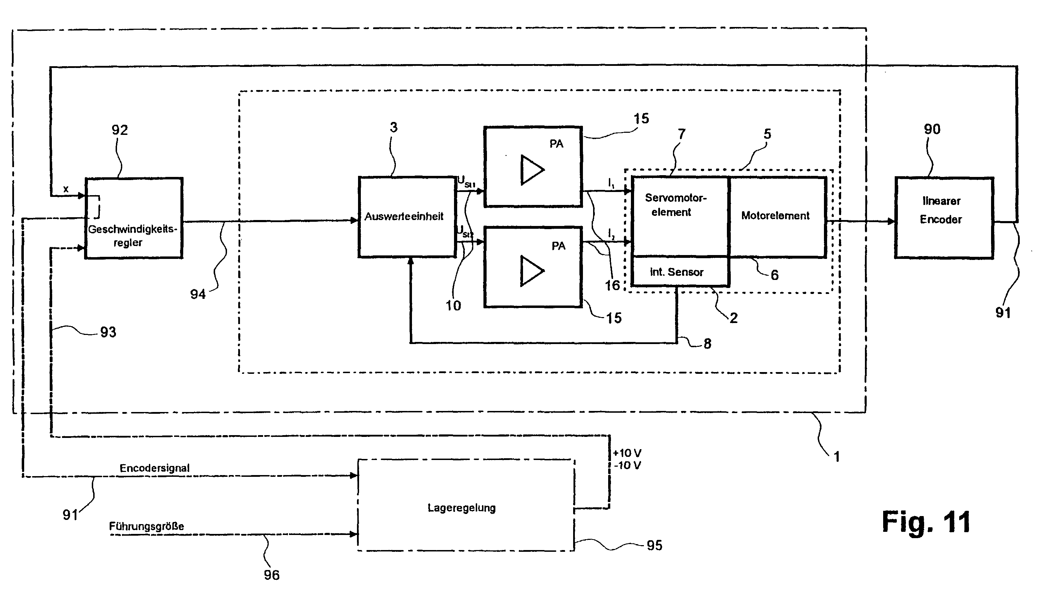

Fig. 11 zeigt das Blockschaltbild einer erweiterten Ausführungsform der Regeleinheit. Diese Ausführungsform beinhaltet die bereits detailliert beschriebene Auswerteeinheit 3. Darüber hinaus ist ein externes Meßsystem 90 vorgesehen, welches ein externes Meßsignal 91 erzeugt. Bei dem externen Meßsystem 90 handelt es sich um ein beliebiges Meßsystem, mit dem die Stellung zwischen Aktiv- und Passiveinheit ermittelt werden kann, wobei das externe Meßsignal 91 über die gesamte zu erfassende Bewegungsstrecke direkt abhängig von dieser Stellung sein muß. Es kommen hier gebräuchliche Längenmeßsysteme zum Einsatz, insbesondere eignen sich Lasermeßsysteme und auf einem Lineal (beispielsweise ein Glasmaßstab) basierende Längenmeßsysteme. Das so gewonnene externe Meßsignal 91 wird einer externen Geschwindigkeitsmeßeinheit 92 zugeführt. Aus wenigstens zwei vom externen Meßsystem 90 ermittelten Stellungen wird wiederum unter Berücksichtigung der Zeit die aktuelle Geschwindigkeit ermittelt. Die externe Geschwindigkeitsmeßeinheit 92 enthält weiterhin eine gebräuchliche Regelschaltung, die das ermittelte zweite Geschwindigkeitssignal mit einem von außen zugeführten Geschwindigkeitssollsignal 93 vergleicht und ein Korrektursignal 94 bereitstellt, welches der Auswerteeinheit 3 zugeführt wird. Damit ist es möglich, die tatsächlich ausgeführte Geschwindigkeit des Gesamtsystems an einen äußeren Vorgabewert anzupassen, wobei standardisierte Einheiten der Regeltechnik zum Einsatz kommen. Als Regelschaltung kann beispielsweise ein PID-Regler verwendet werden.

Bei einer nochmals abgewandelten Ausführungsform enthält die Regeleinheit zusätzlich eine Positionsbestimmungseinheit 95, die das vom externen Meßsystem 90 ermittelte externe Meßsignal 91 als Eingangsgröße empfängt und von außen eine weitere Führungsgröße 96 erhält. Mit der weiteren Führungsgröße 96 wird eine Stopposition vorgegeben, die vom Direktantrieb eingenommen werden soll. Die Positionsbestimmungseinheit 95 vergleicht die weitere Führungsgröße 96 und das externe Meßsignal 91 und generiert gegebenenfalls ein Stoppsignal, welches mit dem Geschwindigkeitssollsignal 93 an den externen Geschwindigkeitsregler 92 übergeben wird, wodurch im Ergebnis die Geschwindigkeit Null eingestellt wird. Es ist zweckmäßig, das Geschwindigkeitssollsignal 93 als Spannungswert zwischen einer positiven und einer negativen Maximalspannung auszulegen, wobei mit dem Vorzeichen der Spannung der Richtungssinn festgelegt ist und bei einer Spannung gleich Null die Geschwindigkeit zu Null eingestellt wird, wodurch der Direktantrieb stoppt.

Die beschriebene Regeleinheit ist vorteilhaft so ausgelegt, daß standardisierte Schnittstellensignale zur Verfügung stehen, so daß sie in bestehende Regelketten eingepaßt werden kann.

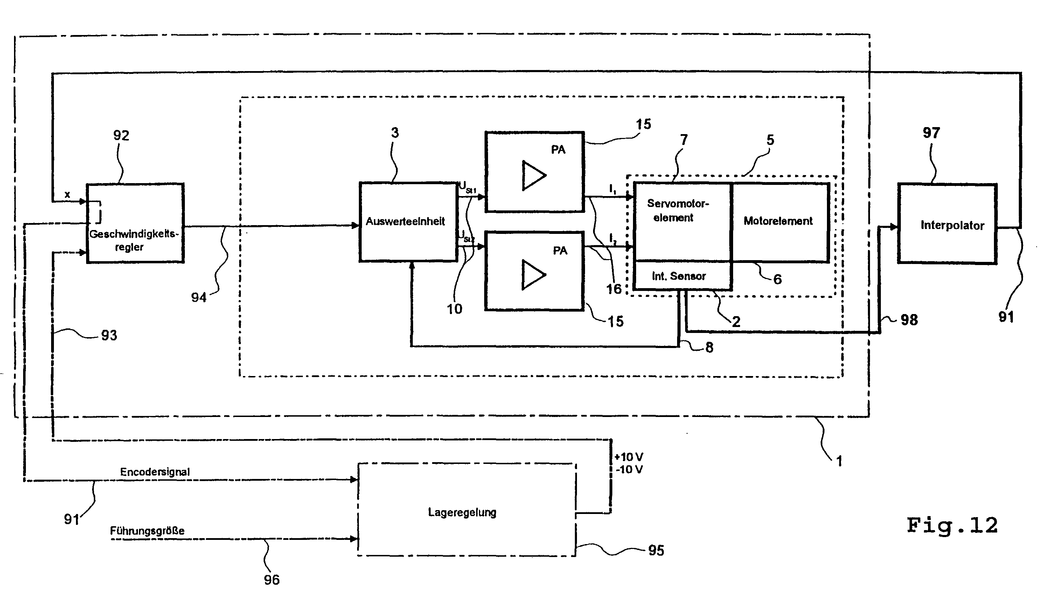

Die Fig. 12 zeigt im Blockschaltbild eine weitere Ausführungsform der Regeleinheit ohne externes Meßsystem. Die Informationen 98 vom integrierten Wegmeßsystem werden im Interpolator 97 in Informationen 91 umgewandelt und dem Geschwindigkeitsregler 92 bereitgestellt.

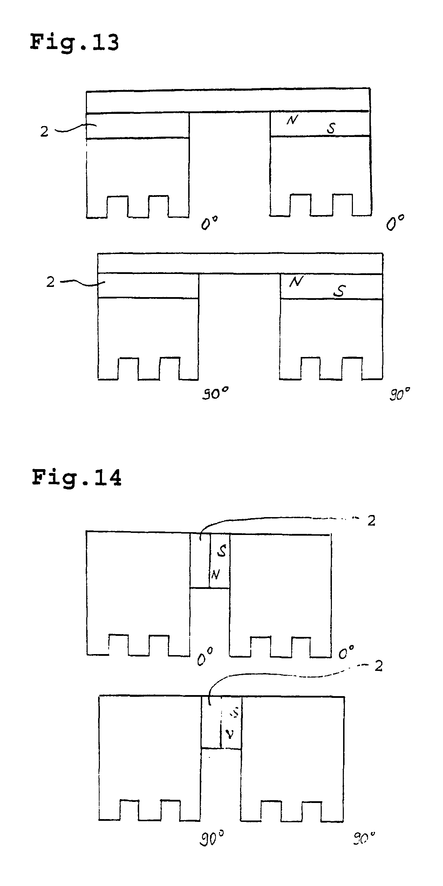

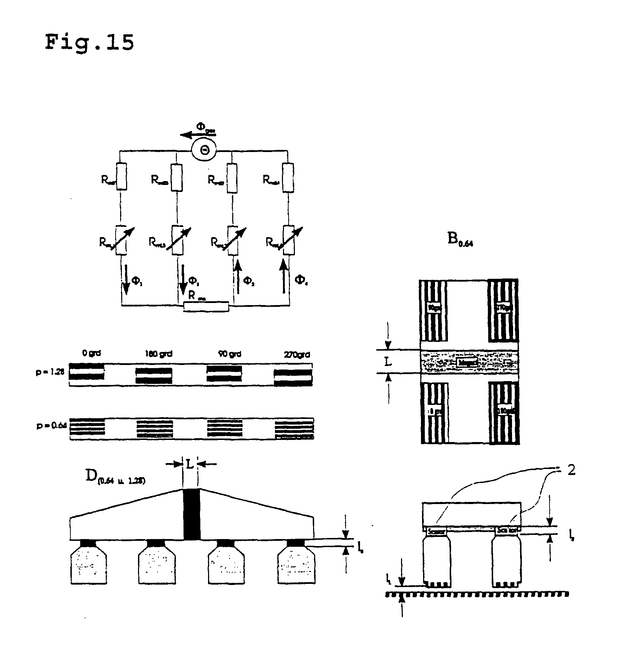

Die Figuren 13 bis 15 zeigen verschiedene Anordnungsvarianten für integrierte Hallsensorwegmeßsysteme.

## Patentansprüche

1. Antriebssystem mit
• einem mehrphasigen Direktantrieb, umfassend
- eine durch elektrische Speiseströme (16) angetriebene Aktiveinheit (5) mit einer Strukturierung,
- eine Passiveinheit (20) mit den Magnetfluß leitenden strukturierten Bereichen mit Polzähnen (21) und Polzahnlücken mit einer auf die Strukturierung der Aktiveinheit (5) abgestimmten Teilungsperiode (p),
- eine die Relativbewegung zwischen Aktiv- und Passiveinheit ermöglichende Führungseinheit (31), und
- ein Leistungsstellglied (15), das die Speiseströme bereitstellt; und
• einer Regeleinheit (1), umfassend
- ein internes Wegmeßsystem (2), das ein von der Stellung zwischen Aktiv- und Passiveinheit abhängiges Positionssignal (8) erzeugt,
- einer Auswerteeinheit (3), die das Positionssignal und weitere Steuersignale (9) empfängt, diese verarbeitet und ein Regelsignal (10) an das Leistungsstellglied (15) abgibt, wobei in Abhängigkeit vom Regelsignal (10) die Phasen des vom Leistungsstellglied bereitgestellten Speisestroms (16) einen geschwindigkeitsabhängigen Vorlaufwinkel gegenüber dem Phasenwinkel eines Standardspeisestromes, der im Schrittmotorbetrieb verwendet werden würde, aufweisen, so daß am Direktantrieb unabhängig von der relativen Lage zwischen Aktiv- und Passiveinheit jeweils die maximale Antriebskraft erzeugt wird
**dadurch gekennzeichnet, daß**:
• der Direktantrieb ein permanenterregter Reluktanzschrittmotor ist,
• die Aktiveinheit (5) Permanentmagnete (26) besitzt, die einen ständigen Magnetfluß (27) durch die Strukturierung der Aktiveinheit und die strukturierten Bereiche (21) der Passiveinheit (20) bereitstellen,
• das interne Wegmeßsystem innerhlab der Aktiveinheit (5) unter Verwendung von mindestens zwei Hallsensoren aufgebaut ist, die mit je einem den Magnetfluß leitenden Strukturkörper mit Polzähnen und Polzahnlücken der Teilungsperiode (p) leitend verbunden sind, und im Abstand von wenigen Mikrometern über der Passiveinheit (20) angeordnet sind, und **daß** die Strukturkörper mit den Polen mindestens eines Permnanentmagneten (45) leitend verbunden sind und einen Versatz von etwa 90° zueinander aufweisen.

2. Antriebssystem nach Anspruch 1, **dadurch gekennzeichnet,daß** von der Auswerteeinheit Steuerspannungen mit vorzugsweise +/- 10 Volt dem Leistungsstellglied zugeführt werden und dem Motor variable Speiseströme mit Vorlaufwinkeln von mindestens 90° bzw. bei entgegengesetzter Bewegungsrichtung wenigstens -90° zur Verfügung gestellt werden.

3. Antriebssystem nach Anspruch 1 oder 2 **dadurch gekennzeichnet, daß** die Führungseinheit durch eine Luftlagerung gebildet wird und das interne Wegmeßsystem im Zentrum der Aktiveinheit angeordnet ist.

4. Antriebssystem nach einem der Ansprüche 1 bis 3, **dadurch gekennzeichnet**,
• daß das interne Wegmeßsystem mit vier Hallsensoren aufgebaut ist, die mit je einem den Magnetfluß leitenden Strukturkörper mit Polzähnen und Polzahnlücken der Teilungsperiode (p) verbunden und im Abstand von wenigen Mikrometern zur Passiveinheit (20) angeordnet sind,
• daß je zwei benachbarte Strukturkörper (51, 52 oder 53, 54) an der der Zahnstruktur gegenüberliegenden Seite durch je eine magnetisch leitende Platte verbunden sind, wobei diese den Magnetismus leitenden Platten mit den Polen von mindestens einem Permanentmagneten verbunden sind,
• daß alle Strukturkörper in der Ebene der Strukturierung der Aktiveinheit angeordnet sind und die Zähne der jeweils zwei benachbarten Strukturkörper (51, 52 oder 53, 54) um 180° zueinander versetzt sind und der Versatz zwischen den anderen Strukturkörpern, die nur über den Permanentmagneten miteinander verbunden sind, 90° beträgt.

5. Antriebssystem nach einem der Ansprüche 1 bis 4, **dadurch gekennzeichnet, daß** die phasenversetzten, vorverarbeiteten (61, 64) Signale der Hallsensoren (41-44) Analog/Digital-Wandlern (66) zugeführt werden, welche die digitalisierten Signale einer kombinatorischen Schaltung (68) als Eingangsgrößen (67) zur Verfügung stellen.

6. Antriebssystem nach einem der Ansprüche 1 bis 5, **dadurch gekennzeichnet, daß** sie weiterhin eine interne Geschwindigkeitsmeßeinheit umfaßt, die die Geschwindigkeit der Bewegung zwischen Aktiv- und Passiveinheit in Form eines internen Geschwindigkeitswertes (80) ermittelt, welcher mit dem Positionssignal (8) zur Erzeugung des Regelsignals (10) verknüpft wird.

7. Antriebssystem nach Anspruch 6, **dadurch gekennzeichnet, daß** sie eine erste Logikschaltung (68) umfaßt, die unter Auswertung von wenigstens zwei Positionsmeßwerten (70) und deren zeitlicher Verknüpfung die aktuelle Geschwindigkeit der Bewegung ermittelt, den internen Geschwindigkeitswert (80) abgibt und einen die Bewegungsrichtung kennzeichnenden Richtungswert (72) und damit das Vorzeichen des Vorlaufwinkels bestimmt.

8. Antriebssystem nach einem der Ansprüche 1 bis 7, **dadurch gekennzeichnet, daß** sie eine erste Logikschaltung (68) umfaßt, die jeder Stellung zwischen Aktiv- und Passiveinheit einen diskreten Lagewert (70) aus einer Wertetabelle zuordnet.

9. Antriebssystem nach einem der Ansprüche 1 bis 8, **dadurch gekennzeichnet, daß** sie eine zweite Logikschaltung (71) umfaßt, die in Abhängigkeit vom Geschwindigkeitswert (80) aus einer Wertetabelle einen Vorlaufwinkel ermittelt, dessen Betrag mit höherer Geschwindigkeit jeweils größer ist, und die binär kodierte Sollwerte (73) erzeugt und an Digital/Analog-Wandler (74) ausgibt.

10. Antriebssystem nach einem der Ansprüche 1 bis 9, **dadurch gekennzeichnet, daß** sie weiterhin ein externes Wegmeßsystem (90) umfaßt, dessen Meßsignale (91) von einer Lageregelung (95) zur Ermittlung der Stellung zwischen Aktiv- und Passiveinheit über den gesamten Bewegungsbereich verwendet werden.

11. Antriebssystem nach Anspruch 10, **dadurch gekennzeichnet, daß** das externe Wegmeßsystem besitzt:
• eine Maßverkörperung, die auf der Passiveinheit (20) parallel zum Fahrweg der Aktiveinheit angeordnet ist,
• einen Abtastkopf, der an der Aktiveinheit (5) wenige Mikrometer von der Maßverkörperung entfernt angeordnet ist.

12. Antriebssystem nach einem der Ansprüche 1 bis 9 **dadurch gekennzeichnet, daß** das interne Wegmeßsystem zusätzlich zur Kommutierung auch zur Lageregelung dient, indem die analogen Signale des internen Wegmeßsystems von einem Interpolator in Meßsignale (91) umgesetzt und einem Geschwindigkeitsregler (92) sowie einem Lageregler (95) zugeführt werden.

13. Verfahren zur Ansteuerung eines mehrphasigen. Direktantriebs nach dem Prinzip des permanenterregten Reluktanzschrittmotors, der
• eine durch elektrische Speiseströme (16) mit mindestens zwei Phasen angetriebene Aktiveinheit (5) mit einer Strukturierung,
• eine Passiveinheit (20) mit den Magnetfluß leitenden Bereichen in Form von Polzähnen (21) mit einer auf die Struktur der Funktionsfläche der Aktiveinheit (5) abgestimmten Teilungsperiode (p),
• eine die Relativbewegung zwischen Aktiv- und Passiveinheit ermöglichende Führungseinheit (31) und
• eine Leistungsstellglied (15), das die Speiseströme (16) bereitstellt,
besitzt, wobei im Schrittmotorbetrieb ein Standardspeisestrom verwendet wird, mit folgenden Verfahrensschritten:
• ein von der Stellung zwischen Aktiv- und Passiveinheit abhängendes Positionssignal (8), welches die absolute Stellung zwischen Aktiv- und Passiveinheit innerhalb einer Teilungsperiode (p) widerspiegelt und sich zyklisch in der darauffolgenden Teilungsperiode wiederholt, wird durch ein internes Wegmeßsystem ermittelt;
• aus dem Positionssignal (8) wird unter Berücksichtigung weiterer Steuersignale (9) ein Regelsignal (10) gebildet;
• mit dem Regelsignal (10) werden die vom Leistungsstellglied (15) bereitgestellten Speiseströme (16) so beeinflußt, daß die Speiseströme einen derartigen geschwindigkeitsabhängigen Vorlaufwinkel von wenigstens 90° bzw. wenigstens -90° bei entgegengesetztem Richtungssinn der Bewegung gegenüber dem Standardspeisestrom besitzen, daß am Direktantrieb unabhängig von der relativen Lage zwischen Aktiv- und Passiveinheit jeweils die maximale Antriebskraft erzeugt wird;
• mit einem externen Meßsystem (90) wird zusätzlich ein externes Meßsignal (91) ermittelt, welches über den Gesamtbewegungsbereich direkt von der Stellung zwischen Aktiv- und Passiveinheit abhängig ist;
• aus dem externen Meßsignal (91) und der Zeit wird ein die Geschwindigkeit der Bewegung repräsentierender externer Geschwindigkeitswert ermittelt;
• dieser Geschwindigkeitswert wird in einer Regelschaltung mit einem Geschwindigkeitssollsignal (93) und einem die maximal vom Antrieb zu erzeugende Kraft bestimmenden Kraftsollsignal verknüpft;
• entsprechend der Kennlinie der Reglerschaltung wird ein Korrektursignal (94) ermittelt;
• das Korrektursignal (94) wird der Auswerteeinheit (3) zugeführt und dort zur Bildung des Regelsignals (10) herangezogen.

14. Verfahren nach Anspruch 13, **gekennzeichnet durch** folgende Verfahrensschritte:
• mit vier im Zentrum der Aktiveinheit angeordneten Hallsensoren (41-44) werden vier jeweils um, 90° phasenversetzte Sensorsignale (8) gebildet;
• aus dem ersten Sensorsignal mit 0° Phasenlage und dem zweiten Sensorsignal mit 180° Phasenlage wird ein erstes Differenzsignal (62) gebildet;
• aus dem dritten Sensorsignal mit 90° Phasenlage und dem vierten Sensorsignal mit 270° Phasenlage wird ein zweites Differenzsignal (63) gebildet;
• erstes und zweites Differenzsignal werden digitalisiert;
• die beiden digitalisierten Differenzsignale werden logisch miteinander zu einem die absolute Stellung zwischen Aktiv- und Passiveinheit repräsentierenden Lagewert (70) verknüpft;
• aus dem Lagewert (70) und dem Geschwindigkeitswert (80) wird der Betrag des Vorlaufwinkels der Speiseströme (16) ermittelt, der für eine Ansteuerung des Direktantriebs mit maximaler Antriebskraft erforderlich ist;
• aus den Differenzsignalen (62, 63, 67) wird weiterhin ein die Bewegungsrichtung kennzeichnender Richtungswert (72) ermittelt und damit das Vorzeichen des Vorlaufwinkels bestimmt;
• die Speiseströme (16) werden mit dem ermittelten Vorlaufwinkel dem Direktantrieb eingespeist.

15. Verfahren nach Anspruch 16, **gekennzeichnet durch** die weiteren Verfahrensschritte:
• aus wenigstens zwei aufeinanderfolgenden Positionssignalen (8) wird unter Berücksichtigung der zwischen den Erfassungszeitpunkten verstrichenen Zeitdauer ein die Geschwindigkeit widerspiegelnder Geschwindigkeitswert (80) berechnet;
• der Geschwindigkeitswert (80) wird mit dem Lagewert (70) verknüpft;
• aus dem verknüpften Signal wird wiederum der Vorlaufwinkel des Speisestroms ermittelt, wobei der Betrag des Vorlaufwinkels mit wachsender Geschwindigkeit größer wird.

16. Verfahren nach Anspruch 13, **gekennzeichnet durch** die weiteren Verfahrensschritte:
• das externe Meßsignal (91) wird mit einem vorgegebenen weiteren Führungssignal (96) verglichen, das die vom Direktantrieb einzunehmende Position angibt;
• bei Übereinstimmung zwischen diesen beiden Signalen wird ein Stoppsignal generiert;
• das Stoppsignal wird der Auswerteeinheit (3) zugeführt und bewirkt die exakte Einnahme der gewünschten Position **durch** entsprechende Beeinflussung der Speiseströme.

17. Verfahren nach einem der Ansprüche 13 bis 16, **dadurch gekennzeichnet, daß** als externes Meßsignal (91) eine Längenmeßgröße verarbeitet wird, und **daß** als Regelschaltung ein PID-Regler verwendet wird.

## Claims

1. A drive system having
• a multiphase direct drive, comprising
- an active unit (5), driven by electrical supply current (16), with structuring,
- a passive unit (20) with structured regions which conduct the magnetic flux, having pole teeth (21) and pole tooth gaps with a division period (p) adjusted to the structuring of the active unit (5),
- a guide unit (31) allowing the relative movement between the active unit and the passive unit, and
- a power positioning element (15) which provides the supply current; and
• a regulator unit (1), comprising
- an internal position measuring system (2) which generates a position signal (8) depending on the positioning between the active unit and the passive unit,
- an evaluation unit (3) which receives the position signal and further control signals (9), processes them, and supplies a regulator signal (10) to the power positioning element (15), with, depending on the regulator signal (10), the phases of the supply current (16) provided by the power positioning element having a speed-dependent advance angle relative to the phase angle of a standard supply current which would be used in stepping motor operation, so that the maximum driving power is produced in the direct drive independent of the relative positioning between the active unit and the passive unit
**characterized in that**:
• the direct drive is a permanent magnet reluctance stepping motor,
• the active unit (5) has permanent magnets (26) which provide a continuous magnetic flux (27) through the structuring of the active unit and the structured regions (21) of the passive unit (20),
• the internal position measuring system within the active unit (5) is implemented using at least two Hall sensors, which are each conductively connected with one of the structured bodies, which conduct the magnetic flux, having pole teeth and pole teeth gaps of the division period (p), and are positioned at a distance of the few micrometers over the passive unit (20), and the structured bodies are conductively connected with the poles of at least one permanent magnet (45) and are offset by approximately 90° to one another.

2. The drive system according to claim 1, **characterized in that** control voltages, preferably at +/- 10 volts, are supplied from the evaluation unit to the power positioning element and the motor is provided with variable supply currents with advance angles of at least 90° and/or, in the opposite direction movement, at least -90°.

3. The drive system according to claim 1 or 2, **characterized in that** the guide unit is formed by an air-cushion bearing and the internal position measuring system is located in the center of the active unit.

4. The drive system according to one of the claims 1 to 3,
**characterized in that**
• the internal position measuring system is implemented with four Hall sensors which are each connected with one of the structured bodies, conducting the magnetic flux, having pole teeth and pole tooth gaps of the division period (p) and are positioned at a distance of a few micrometers from the passive unit (20),
• each two neighboring structured bodies (51, 52 or 53, 54) on the side lying opposite to the tooth structure are connected through a magnetically conducting plate, with this magnetically conducting plate connected with the poles of at least one permanent magnet,
• all structured bodies are positioned in the plane of the structuring of the active unit and the teeth of each two neighboring structured bodies (51, 52 or 53, 54) are offset by 180° to one another, and the offset between the other structured bodies, which are only connected with one another via the permanent magnets, is 90°.

5. The drive system according to one of the claims 1 to 4,
**characterized in that** the phase-displaced, preprocessed (61, 64) signals of the Hall sensors (41 - 44) are supplied to analog/digital converters (66), which provide the digitized signals to a combinatorial circuit (68) as input values (67).

6. The drive system according to one of the claims 1 to 5,
**characterized in that** it further comprises an internal speed measurement unit which detects the speed of the movement between the active unit and the passive unit in the form of an internal speed value (80), which is linked with the position signal (8) for generation of the regulator signal (10).

7. The drive system according to claim 6, **characterized in that** it comprises a first logic circuit (68) which determines the actual speed of the movement by evaluating at least two position measurement values (70) and their temporal interconnection, supplies the internal speed value (80), and determines the direction value (72) characterizing the movement direction and thereby the sign of the advance angle.

8. The drive system according to one of the claims 1 to 7,
**characterized in that** it comprises a first logic circuit (68) which assigns each positioning between the active unit and the passive unit a discrete position value (70) from a table of values.

9. The drive system according to one of the claims 1 to 8,
**characterized in that** it comprises a second logic circuit (71) which determines an advance angle from a table of values depending on the speed value (80), whose amount is larger the higher the speed is, and generates the binary coded desired value (73) and outputs it to a digital/analog converter (74).

10. The drive system according to one of the claims 1 to 9,
**characterized in that** it further comprises an external position measuring system (90) whose measurement signals (91) are used by a position regulator (95) to detect the positioning between the active unit and the passive unit over the entire range of movement.

11. The drive system according to claim 10, **characterized in that** the external position measurement system has:
• a measuring standard, which is located on the passive unit (20) parallel to the movement path of the active unit,
• a scanning head which is located on the active unit (5) a few micrometers from the measuring standard.

12. The drive system according to one of the claims 1 to 9,
**characterized in that** the internal position measurement system, in addition to commutation, also serves for position regulation, **in that** the analog signals of the internal position measurement system are converted by an interpolator into measurement signals (91) and are supplied to a speed regulator (92) and a position regulator (95).

13. A process for the control of a multiphase direct drive according to the principle of the permanent magnet reluctance stepping motor, having
• an active unit (5) with structuring, driven by electric supply currents (16) with at least two phases,
• a passive unit (20) having regions conducting the magnetic flux in the form of pole teeth (21) with a division period (p) adjusted to the structure of the functional area of the active unit (5),
• a guide unit (31) allowing the relative motion between the active unit and the passive unit, and
• a power positioning element (15) which provides the supply currents (16),
with a standard supply current being used in stepping motor operation, with the following process steps:
• a position signal (8), dependent on the positioning between the active unit and the passive unit, which reflects the absolute positioning between the active unit and the passive unit within one division period (p) and which repeats itself cyclically in the subsequent division period, is determined by an internal position measuring system;
• a regulator signal (10) is formed from the position signal (8), taking into account further control signals (9) ;
• the supply currents (16) provided by the power positioning element (15) are influenced by the regulator signal (10) in such a way that the supply currents have an speed-dependent advance angle of at least 90° and/or, in the opposite direction of movement relative to the standard supply current, at least -90°, such that the maximum driving power is produced in the direct drive independent from the relative positioning between the active unit and the passive unit;
• in addition, an external measurement signal (91) is determined, with an external measurement system (90), which is directly dependent on the positioning between the active unit and the passive unit over the entire range of movement;
• an external speed value is determined, from the external measurement signal (91) and the time, which represents the speed of the movement;
• the speed is linked in a regulator circuit with a desired speed signal (93) and a desired power signal, which determines the maximum power to be generated by the drive;
• a correction signal (94) is determined according to the characteristic curve of the regulator circuit;
• the correction signal (94) is supplied to the evaluation unit (3) and used there for formation of the regulator signal (10).

14. The process according to claim 13, **characterized by** the following process steps:
• four sensor signals (8), each phase-displaced by 90°, are formed by four Hall sensors (41 - 44) located in the center of the active unit
• a first differential signal (62) is formed from the first sensor signal with 0° phase angle and the second sensor signal with 180° phase angle;
• a second differential signal (63) is formed from the third sensor signal with 90° phase angle and the fourth sensor signal with 270° phase angle;
• the first and second differential signal are digitized;
• the two digitized differential signals are logically linked with one another into a position value (70) representing the absolute positioning between the active unit and the passive unit;
• the amount of the advance angle of the supply currents (16), which is necessary for control of the direct drive with maximum driving power, is determined from the position value (70) and the speed value (80);
• furthermore, a direction value (72) characterizing the direction of movement is determined from the differential signals (62, 63, 67) and the sign of the advance angle is thereby determined;
• the supply currents (16) are provided to the direct drive with the advance angle determined.

15. The process according to claim 16, **characterized by** the further process steps:
• a speed value (80) reflecting the speed is calculated from at least two sequential position signals (8) by considering the period of time passing between the detection times;
• the speed value (80) is linked with the position value (70);
• the advance angle of the supply current is, in turn, determined from the linked signal, with the amount of the advance angle becoming larger with increasing speed.

16. The process according to claim 13, **characterized by** the further process steps:
• the external measurement signal (91) is compared with a predetermined further guide signal (96) which indicates the position to be assumed by the direct drive;
• if these two signals correspond, a stop signal is generated;
• the stop signal is supplied to the evaluation unit (3) and causes the exact assumption of the desired position through appropriate influence of the supply currents.

17. The process according to one of the claims 13 to 16,
**characterized in that** a length measurement value is processed as the external measurement signal (91) and a PID regulator is used as the regulator circuit.

## Revendications

1. Système d'entraînement avec
• un entraînement direct polyphasé comprenant
- une unité active (5) mue par des courant d'alimentation (16) électriques, et portant une structuration,
- une unité passive (20) avec des zones structurées conduisant le flux magnétique, comportant des dents polaires (21) et des vides entre dents polaires avec une période de division (p) adaptée à la structuration de l'unité active (5),
- une unité de guidage (31) qui permet le déplacement relatif entre l'unité active et l'unité passive et
- un organe de réglage de puissance (15) qui délivre les courants d'alimentation, et
• une unité de régulation (1), comprenant
- un système (2) de mesure de course interne qui produit un signal de position (8) dépendant de la position entre l'unité active et l'unité passive,
- une unité de traitement (3) qui reçoit le signal de position ainsi que d'autres signaux, les traite et délivre un signal de réglage (10) à l'organe de réglage de puissance (15), les phases du courant d'alimentation (16) délivré par l'organe de réglage de puissance (15) présentant un angle d'avance dépendant de la vitesse par rapport à l'angle de phase d'un courant d'alimentation standard utilisé en fonctionnement en moteur pas-à-pas, de sorte que chaque fois la puissance d'entraînement maximale est produite au niveau de l'entraînement direct, indépendamment de la position relative entre l'unité active et l'unité passive,
**caractérisé en ce que**
• l'entraînement direct est un moteur pas-à-pas à réluctance à excitation permanente,
• l'unité active (5) comporte des aimants permanents qui fournissent un flux magnétique (27) constant à travers la structuration de l'unité active et les zones structurées (21) de l'unité passive (20),
• le système (2) de mesure de course interne est intégré dans l'unité active (5) et utilise au moins deux capteurs à effet de Hall qui sont liés chacun de manière conductrice à un corps structuré conduisant le flux magnétique, avec des dents polaires et des vides entre dents polaires de période de division (p), et sont disposés quelques microns au-dessus de l'unité passive (20), et **en ce que** les corps structurés sont reliés de manière conductrice aux pôles d'au moins un aimant permanent (45) et présentent un décalage mutuel d'environ 90°.

2. Système d'entraînement selon la revendication 1, **caractérisé en ce que** l'unité de traitement envoie à l'organe de réglage de puissance des tensions de commande de préférence de +/- 10 volts, et que le moteur reçoit des courants d'alimentation variables avec des angles d'avance d'au moins 90°, voire d'au moins -90° dans le cas d'un déplacement dans la direction opposée.

3. Système d'entraînement selon la revendication 1 ou 2, **caractérisé en ce que** l'unité de guidage est constituée d'un palier à air et que le système de mesure de course interne est disposé au centre de l'unité active.

4. Système d'entraînement selon une des revendications 1 à 3, **caractérisé**
• en ce que le système (2) de mesure de course interne est composé de quatre capteurs de Hall qui sont reliés chacun à un corps structuré conduisant le flux magnétique, pourvu de dents polaires et de vides entre dents polaires de période (p), et sont disposés à une distance de quelques micromètres de l'unité passive (20),
• en ce que deux corps structurés (51, 52 ou 53, 54) consécutifs sont reliés par une plaque magnéto-conductrice du côté opposé à la structure de dents, la plaque conduisant le flux magnétique étant reliée aux pôles d'au moins un aimant permanent,
• en ce que tous les corps structurés sont disposés dans le plan de la structuration de l'unité active (5) et que les dents des deux corps structurés consécutifs (51, 52 ou 53, 54) sont mutuellement décalées de 180° et que le décalage entre les autres corps structurés reliés entre eux uniquement par les aimants permanents est de 90°.

5. Système d'entraînement selon une des revendications 1 à 4, **caractérisé en ce que** les signaux déphasés, prétraités (61, 64) des capteurs de Hall (41, 44) sont transmis à des convertisseurs analogique/numérique qui transmettent les signaux numérisés à un circuit combinateur (68), en tant que grandeurs d'entrée (67).

6. Système d'entraînement selon une des revendications 1 à 5, **caractérisé en ce qu'**il comprend en outre une unité interne de mesure de vitesse, qui mesure la vitesse du déplacement entre unité active et unité passive sous la forme d'une valeur de vitesse (80), qui est combinée au signal de position (8) pour produire le signal de réglage (10).

7. Système d'entraînement selon la revendication 6, **caractérisé en ce qu'**il comprend un premier circuit logique (68) qui, en exploitant au moins deux valeurs de mesure de position (70) et leur lien temporel, calcule la vitesse actuelle du déplacement, fournit la valeur de vitesse interne (80) et détermine une valeur de direction (72) caractérisant la direction de déplacement et par suite le signe de l'angle d'avance.

8. Système d'entraînement selon une des revendications 1 à 7, **caractérisé en ce qu'**il comprend un premier circuit logique (68) qui associe à chaque position entre unité active et unité passive une valeur de position (70) discrète prise dans un tableau de valeurs.

9. Système d'entraînement selon une des revendications 1 à 8, **caractérisé en ce qu'**il comprend un second circuit logique (71) qui, en fonction de la valeur de mesure de vitesse (80), détermine à partir d'un tableau de valeurs un angle d'avance, dont la valeur augmente avec la vitesse, et qui produit des valeur de consigne (73) binaires codées et les délivre au convertisseur analogique/numérique.

10. Système d'entraînement selon une des revendications 1 à 9, **caractérisé en ce qu'**il comprend en outre un système de mesure de course (90) externe dont les signaux de mesure (91) sont utilisés par un dispositif de réglage de position (95) pour déterminer la position entre unité active et unité passive sur l'ensemble de la zone de déplacement.

11. Système d'entraînement selon la revendication 10, **caractérisé en ce que** le système de mesure de course externe comprend:
• une mesure matérialisée qui est disposée sur l'unité passive (20) parallèlement au trajet de déplacement de l'unité active,
• une tête de palpage qui est disposée sur l'unité active (5), à quelques micromètres de la mesure matérialisée.

12. Système d'entraînement selon une des revendications 1 à 9, **caractérisé en ce que** le système de mesure de course interne, outre la commutation, sert au réglage de position, les signaux analogiques du système de mesure interne étant convertis par un interpolateur en signaux de mesure (91) et transmis à un dispositif de réglage de vitesse (92) ainsi qu'à un dispositif de réglage de position (95).

13. Procédé de commande d'un entraînement direct polyphasé fonctionnant selon le principe du moteur pas-à-pas à réluctance à excitation permanente, comportant
• une unité active (5) mue par des courants d'alimentation (16) électriques à au moins deux phases, avec une structuration,
• une unité passive (20) avec des zones structurées conduisant le flux magnétique sous la forme de dents polaires (21) avec une période de division (p) adaptée à la structuration de la surface fonctionnelle de l'unité active (5),
• une unité de guidage (31) qui permet le déplacement relatif entre l'unité active et l'unité passive et
• un organe de réglage de puissance (15) qui délivre les courants d'alimentation,
un courant d'alimentation standard étant utilisé en mode de fonctionnement pas-à-pas,
comprenant les étapes de procédé suivantes:
• détermination par un système (2) de mesure de course interne, d'un signal de position (8) dépendant de la position entre l'unité active et l'unité passive, qui reflète la position absolue entre l'unité active et l'unité passive à l'intérieur d'une période de division (p) et se répète de manière cyclique au cours de la période de division suivante;
• à partir du signal de position (8), formation d'un signal de réglage (10) en tenant compte d'autres signaux de commande (9);
• à l'aide du signal de réglage (10) modification des courants d'alimentation (16) délivrés par l'organe de réglage de puissance (15) de manière telle que lesdits courants d'alimentation présentent un angle d'avance dépendant de la vitesse d'au moins 90°, ou -90° dans la direction de déplacement opposée, par rapport au courant d'alimentation standard, afin que, quelle que soit la position relative entre unité active et unité passive, l'entraînement direct fournisse toujours la force d'entraînement maximale;
• détermination à l'aide d'un système de mesure (90) externe d'un signal de mesure (91) supplémentaire externe qui, sur la totalité de la zone de déplacement, est directement dépendant de la position entre unité active et unité passive;
• détermination à partir du signal de mesure (91) externe et du temps d'une valeur de vitesse externe qui représente la vitesse du déplacement;
• combinaison dans un circuit de régulation de cette valeur de vitesse avec un signal de consigne de vitesse (93) et un signal de consigne de force caractérisant la force maximale à produire par l'entrâmement ;
• détermination d'un signal de correction (94) d'après la courbe caractéristique du circuit de régulation;
• transmission du signal de correction (94) à l'unité de traitement(3) et formation dans celle-ci du signal de réglage (10).

14. Procédé selon la revendication 13, **caractérisé en ce qu'**il comporte les étapes suivante:
• formation à l'aide de quatre capteurs de Hall (41-44) disposés au centre l'unité active de quatre signaux de capteurs (8) qui sont déphasés chaque fois de 90°;
• formation à partir du premier signal de capteur, d'angle de phase 0°, et du deuxième signal de capteur, d'angle de phase 180°, d'un premier signal différentiel (62);
• formation à partir du troisième signal de capteur, d'angle de phase 90°, et du deuxième signal de capteur, d'angle de phase 270°, d'un deuxième signal différentiel (63);
• numérisation des premier et deuxième signaux différentiels;
• combinaison logique des deux signaux différentiels numérisés en une valeur de position (70) qui représente la position absolue entre unité active et unité passive;
• à partir de la valeur de position (70) et de la valeur de vitesse (80) détermination de la valeur de l'angle d'avance des courants d'alimentation qui est nécessaire pour faire fonctionner l'entraînement direct à la force d'entraînement maximale;
• détermination en outre à partir des signaux différentiels (62, 63, 67) d'une valeur de direction (72) qui caractérise la direction de déplacement et par suite le signe de l'angle d'avance;
• fourniture des courants d'alimentation (16) à l'entraînement direct, avec l'angle d'avance déterminé.

15. Procédé selon la revendication 14, **caractérisé en ce qu'**il comporte les étapes suivante:
• à partir d'au moins deux signaux de position (8) consécutifs, calcul d'une valeur de vitesse (80) reflétant la vitesse, en tenant compte du temps écoulé entre les instant de mesure;
• combinaison de la valeur de vitesse (80) avec la valeur de position (70);
• à partir du signal combiné, détermination de l'angle d'avance des courants d'alimentation, la valeur de l'angle d'avance augmentant avec la vitesse.

16. Procédé selon la revendication 13, **caractérisé en ce qu'**il comporte les étapes suivante:
• comparaison du signal de mesure (91) externe avec un signal de référence (96) prédéterminé qui indique position à prendre par l'entraînement direct;
• en cas concordance entre les deux signaux, génération d'un signal d'arrêt;
• envoi du signal d'arrêt à l'unité de traitement (3), lequel signal amène la position souhaitée par action correspondante sur les courants d'alimentation.;

17. Procédé selon une des revendications 13 à 16, **caractérisé en ce qu'**on utilise comme signal de mesure (91) externe une grandeur de mesure de longueur et **en ce qu'**on utilise comme circuit de régulation un régulateur PID.
